# EUROPEAN PATENT APPLICATION

(11) **EP 2 482 178 A1**
(43) Date of publication of application: **01.08.2012**
(21) Application number: 11194042.5
(22) Date of filing: 16.12.2011
(51) Int. Cl.: G06F 3/048, G06F 1/16

(54) **Electronic device and method for inputting information into electronic device**

(30) Priority: 28.01.2011 TW 100103505
(71) Applicant: Hon Hai Precision Industry Co., Ltd., New Taipei City (TW)
(72) Inventor: Lin, Tay-Yang, New Taipei City (TW); Chen, Chin-Feng, New Taipei City (TW); Liu, Shu-Ming, New Taipei City (TW); Shih, Chi-Tse, New Taipei City (TW); Hou, Ni-Chun, New Taipei City (TW); Hsu, Hsin-Chih, New Taipei City (TW); Du, Cheng-Hsiu, New Taipei City (TW)
(74) Representative: Gray, John James

(57) **Abstract**

An electronic device includes a motherboard, a touch screen, an input module, and an identifying module connected to the touch screen and the input module. The touch screen is connected to the motherboard and attached to the front of the electronic device, the input module is disposed at the rear of the electronic device. The indentifying module identifies whether input has come from the touch screen or from the input module and after any discrimination which may be necessary sends the input information to the motherboard which executes an operation(s) according to the input information. A method for inputting information into the electronic device is also disclosed.

## Description

### Field

The present disclosure relates to an electronic device and a method for inputting information into the electronic device.

### BackGround

Many electronic devices, such as a cell phone, a personal digital assistant (PDA), or an e-Book, includes a touch screen attached at the front of the electronic device. The touch screen has both a display function that displays content, and an input function that detects the input on a contact position when a user touches the screen with a finger or a special-purpose pen. If a user wants to browse the next page of a file displayed on the touch screen, the user can touch a corresponding icon displayed on the touch screen. However, when an electronic device is held in one or two hands, only the front touch screen is available for input, and the fingers of the user at the rear of the electronic device cannot be used for inputting data, and this limitation prevents optimal convenience when inputting instructions.

Therefore, there is room for improvement within the art.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.

FIG. 1 a block diagram of an electronic device according to an embodiment.

FIG. 2 is a front view of the electronic device of FIG. 1.

FIG. 3 is a rear view of the electronic device of FIG. 2.

FIG. 4 is a flowchart of a method for inputting information by touch into the electronic device of FIG. 1.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

In general, the word "module," as used herein, refers to logic embodied in hardware or firmware, or to a collection of software instructions, written in a programming language, such as, for example, Java, C, or assembly. One or more software instructions in the modules may be embedded in firmware, such as in an EPROM. It will be appreciated that modules may comprise connected logic units, such as gates and flip-flops, and may also comprise programmable units, such as programmable gate arrays or processors. The modules described herein may be implemented as either software and/or hardware modules and may be stored in any type of computer-readable medium or other computer storage device.

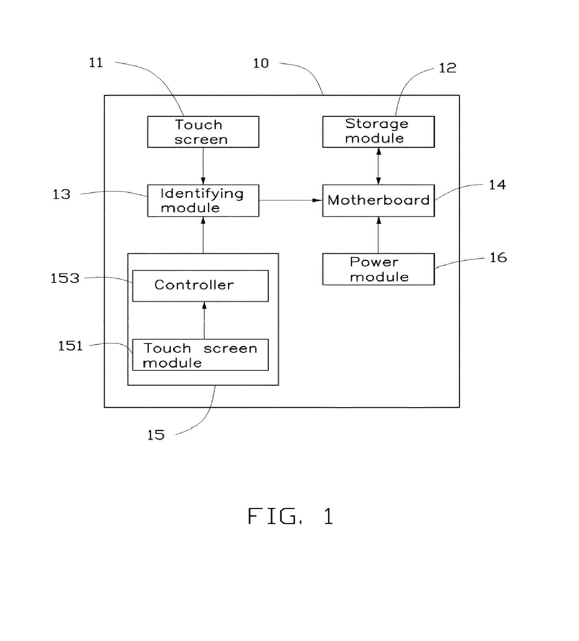

Referring to FIG. 1, an embodiment of an electronic device 10 includes a touch screen 11, a storage module 12, an identifying module 13, a motherboard 14, a touchpad 15, and a power module 16. The touch screen 11 performs both display and input functions. The storage module 12 is connected to the motherboard 14 and stores files and software programs. The identifying module 13 is connected to the touch screen 11 and the touchpad 15 and indentifies whether input information has come from the touch screen 11 or from the touchpad 15. The motherboard 14 is connected to the identifying module 13 for receiving the input information and executing instructions according to the input information. The touchpad 15 includes a touch sense module 151 and a controller 153 connected to the touch sense module 151. The touch sense module 151 senses the touch of a user and sends the information (including touch pressure or intensity and touch position) to the controller 153. The controller 153 compares the sensed touch intensity with a predetermined value. If the sensed touch intensity is less than the predetermined value, the controller 153 does not send any information to the indentify module 13. If the sensed touch intensity is equal to or greater than the predetermined value, the controller 153 sends the information from the touchpad 15 to the identifying module 13. If a user touches the touchpad 15 unintentionally without firm pressure, it will not generate any input to the electronic device 10. The power module 16 supplies power to the motherboard 14 and other components in the electronic device 10. In one embodiment, the electronic device 10 is a cell phone, a PDA, or an e-Book, or the like.

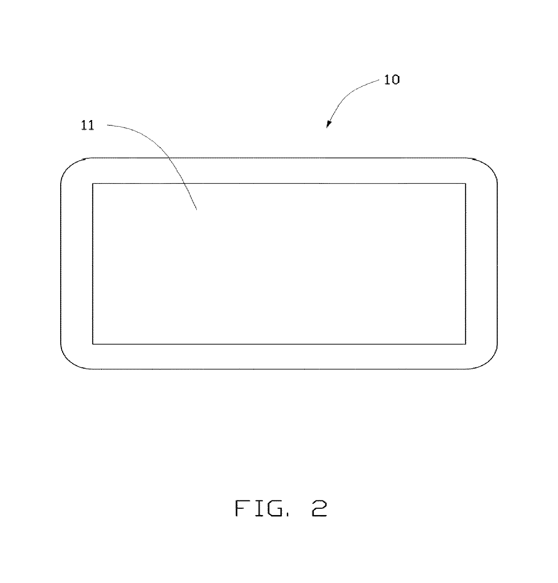

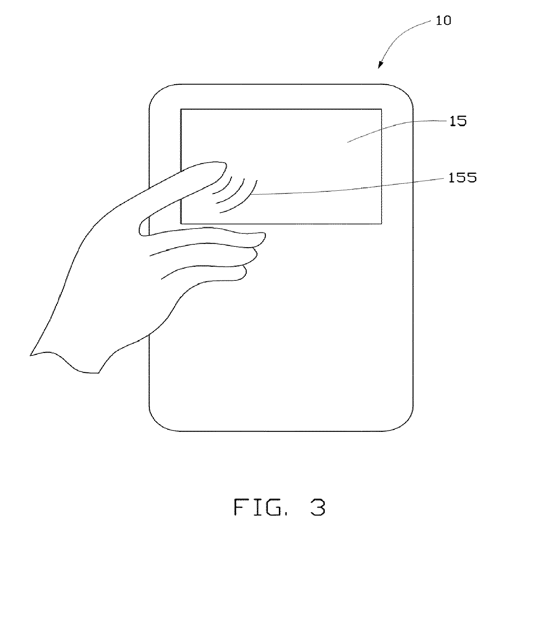

Referring to FIGS. 2 and 3, the touch screen 11 is at the front of the electronic device 10. The touchpad 15 is disposed at the rear or back of the electronic device 10. When a user is holding the electronic device 10 in one or both hands, the fingers of the user can touch both the touch screen 11 at the front and the touchpad 15 at the rear. A plurality of lines standing proud of the surface, or in another embodiment, a plurality of grooves, (arc-shaped protrusions 155) protrude from the surface of the touchpad 15, which allows users to orient their finger(s) in relation to the touchpad 15, using their own sense of touch. The touchpad 15 itself can be located in a depression or concavity for further ease of use. In other embodiments, the touchpad 15 can be replaced by other input devices, such as a stick, a trackball, a rocker arm, or by buttons.

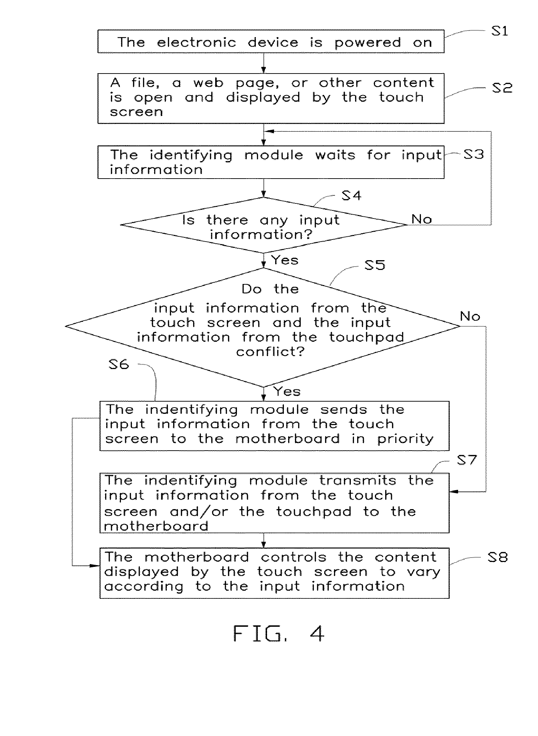

Referring to FIG. 4, the operational sequence, according to one embodiment of the electronic device 10, includes the following process or blocks.

In block S01, the power module 16 is powered on and the electronic device 10 starts to work.

In block S02, a file, a web page, or other content is opened and displayed by the touch screen 11.

In block S03, the identifying module 13 awaits input information from the touch screen 11 and/or the touchpad 15.

In block S04, the identifying module 13 goes to block S05 when any information is input.

In block S05, the identifying module 13 determines whether there is any conflict between any information input to the touch screen 11 and any information input to the touchpad 15. If there is a conflict, the process flow goes to block S06; if there is no conflict, the process flow goes to block S07.

In block S06, the indentify module 13 prefers the input information from the touch screen 11 and transmits this information to the motherboard 14 which executes instructions according to the input information from the touch screen 11.

In block S07, the indentify module 13 transmits all input information either from the touch screen 11 or from the touchpad 15, or from both, to the motherboard 14 which executes the required operation(s).

In block S08, the motherboard 14 may control the display on the touch screen 11 in accordance with the input from the user. For instance, if the touchpad 15 is pressed only one time, the motherboard 14 may control the touch screen 11 to display the next or the previous page of the file according to the function(s) as set up or required by the user.

While the present disclosure has been illustrated in the preferred embodiments thereof, and while the preferred embodiments have been described in considerable detail, it is not intended to restrict or in any way limit the scope of the appended claims to such details. Additional advantages and modifications within the spirit and scope of the present disclosure will readily appear to those skilled in the art. Therefore, the present disclosure is not to be limited to the specific details and illustrative examples shown and described.

Depending on the embodiment, certain of the steps of the method(s) described may be removed, others may be added, and the sequence of steps may be altered. It is also to be understood that the description and the claims drawn for a method may include some indication in reference to certain steps. However, the indication used is only for identification purposes and not as a suggestion as to an order for the steps.

## Claims

1. An electronic device comprising:
a motherboard;
a touch screen, connected to the motherboard, arranged at a front side of the electronic device;
an input module disposed at a rear side of the electronic device; and
an indentify module, connected to the touch screen and the input module, configured to identify whether input information comes from the touch screen or the input module and send the input information to the motherboard such that the motherboard can execute instructions according to the input information.

2. The electronic device of claim 1, wherein the input module comprises a touch sense module and a controller connected to the touch sense module, the touch senses module is configured to sense user's touch and send the sensed information including touch intensity and touch position to the controller, and the controller is configured to send the sensed information to the indentify module when the touch intensity exceeds a predetermined value.

3. The electronic device of claim 1, wherein at least one arc-shaped protrusion protrudes from the input module.

4. The electronic device of claim 1, wherein the input module comprises a concave portion.

5. The electronic device of claim 1, wherein the input module comprises a touchpad, a stick, a trackball, a rocker arm, or a button.

6. The electronic device of claim 1, wherein the motherboard is connected to the identifying module for receiving the input information.

7. A method comprising:
powering on an electronic device comprising a touch screen disposed at a front side of the electronic device and an input module disposed at a rear side of the electronic device;
detecting whether there is input information coming from the touch screen and/or the input module;
if there is input information coming from the touch screen, responding to the input information coming from the touch screen;
if there is input information coming from the input module, determining whether the input information from the input module conflicts with the input information from the touch screen; if conflict exists, responding to the input information from the touch screen; if not, responding to the input information from the input module.

8. The method of claim 7, further comprising detecting touch intensity when the input module is touched.

9. The method of claim 8, further comprising comparing the touch intensity with a predetermined value.

10. The method of claim 9, wherein if the touch intensity is less than the predetermined value, the input module does not responds to the touch; if the touch intensity is not less than the predetermined value, the input module responds to the touch.

11. The method of claim 7, further comprising sensing a touch position when the input module is touched.

12. The method of claim 7, further comprising displaying a file opened by user on the touch screen before detecting.

13. The method of claim 12, further comprising sending the input information coming from the touch screen or the input module to a motherboard of the electronic device.

14. The method of claim 13, further comprising varying the content displayed on the touch screen after sending the input information to the motherboard.
